# EUROPÄISCHE PATENTSCHRIFT

(11) **EP 4 343 481 B1**
(45) Veröffentlichungstag und Bekanntmachung des Hinweises auf die Patenterteilung: **20.08.2025**
(21) Anmeldenummer: 22197782.0
(22) Anmeldetag: 26.09.2022
(51) Int. Cl.: G05D 1/617, G05D 1/65, B60T 7/22, G05D 105/10, G05D 107/70, G05D 109/10

(54) **VERFAHREN ZUM BETRIEB EINES ARBEITSGERÄTS UND ARBEITSGERÄT**
METHOD FOR OPERATING A WORK DEVICE AND WORK DEVICE
PROCÉDÉ DE FONCTIONNEMENT D'UN APPAREIL DE TRAVAIL ET APPAREIL DE TRAVAIL

(43) Veröffentlichungstag der Anmeldung: 27.03.2024
(73) Patentinhaber: Vorwerk & Co. Interholding GmbH, 42270 Wuppertal (DE)
(72) Erfinder: BARTELS, Jascha, 45134 Essen (DE); ENGELS, Fabian, 42719 Solingen (DE); WALLENTIN, Markus, 45131 Essen (DE)
(74) Vertreter: Dr. Solf & Zapf Patent- und Rechtsanwalts PartG mbB

(56) Entgegenhaltungen:
- US-A1- 2017 183 005
- US-A1- 2018 333 869
- US-A1- 2021 157 326

## Beschreibung

Die Erfindung betrifft ein Verfahren zum Betrieb eines Arbeitsgeräts, insbesondere ein Reinigungsgerät zum autonomen Reinigen einer Bearbeitungsumgebung, wobei das Arbeitsgerät dazu ausgebildet ist, sich in einer Bearbeitungsumgebung autonom fortzubewegen.

Gattungsgemäße Arbeitsgeräte sind im Stand der Technik in einer Vielzahl von Ausgestaltungen bekannt. Derartige Arbeitsgeräte sind dazu ausgebildet, sich in einer Bearbeitungsumgebung autonom fortzubewegen und Arbeitsaufgaben zu erledigen. Ein Beispiel für solche Arbeitsgeräte sind Reinigungsgeräte, die in einer Bearbeitungsumgebung Reinigungsaufgaben erledigen, Transportroboter in der Lagerlogistik oder Sicherheitsroboter, die zu Überwachungszwecken eingesetzt werden. Ein Reinigungsgerät ist beispielsweise als Saugroboter, Wischroboter oder Saug- und Wischroboter ausgebildet. Üblicherweise verfügen derartige Arbeitsgeräte über mindestens eine Steuereinrichtung, die eine Datenverarbeitungseinrichtung umfasst, und die mit einer Mehrzahl von Sensoren eine Navigation des Arbeitsgerätes in der Bearbeitungsumgebung gewährleistet sowie das Erledigen von Arbeitsaufgaben in der Bearbeitungsumgebung steuert.

Als Reinigungsgeräte ausgebildete Arbeitsgeräte, die für gewerbliche Anwendungen geeignet sind, verfügen gegenüber Reinigungsgeräten, die in Haushalten eingesetzt werden, üblicherweise über ein größeres Bauvolumen, höheres Gewicht, höhere Bewegungsgeschwindigkeiten und mehr Leistung. Darüber hinaus werden erhöhte Anforderungen an die Betriebssicherheit gestellt, z. B. hinsichtlich der Absturzgefahr an Kanten und Treppen sowie bei Kontakt zu Personen oder weiteren Arbeitsgeräten.

Für die Betriebssicherheit eines Arbeitsgerätes ist es daher von gesteigerter Bedeutung, dass bei Erkennen eines Hindernisses oder einer kritischen Betriebssituation eine unverzügliche Reaktion des sich bewegenden Arbeitsgerätes erforderlich ist, um eine Schädigung im Umfeld des Arbeitsgerätes und/oder eine Beschädigung des Arbeitsgerätes zu verhindern.

US 2028/333869 A1 offenbart einen gattungsbildenden mobilen Roboter, der einen Sensor aufweist. Der Sensor erkennt ein Hindernis in einem Erkennungsbereich vor dem Roboter. US 2028/333869 A1 offenbart ein Verfahren, wenn der Sensor ein Hindernis in einem Erkennungsbereich erkennt. So kann der mobile Roboter in Abhängigkeit davon, in welchem Bereich das Hindernis erkannt wurde, abbremsen oder sofort stehen bleiben.

US 2021/157326 A1 offenbart einen Roboter, der sofort stoppt, wenn ein Hindernis in einem vorher definierten Bereich erkannt ist oder die Fahrgeschwindigkeit des Roboters reduziert, wenn ein Hindernis in einem anderen vorher definierten Bereich erkannt ist. Ferner offenbart US 2021/157326 A1 unterschiedliche Beleuchtungsmodi abhängig davon, in welchem Bereich ein Hindernis erkannt ist.

Aus US 2017/183005 A1 ist ein Materialhandhabungsfahrzeug bekannt, das mindestens zwei Bereiche abtastet, um ein Hindernis vor dem Fahrzeug zu erkennen. Wird ein Hindernis in dem ersten Bereich erkannt, so wird ein Bremsvorgang ausgelöst. Auch wenn ein Hindernis in dem zweiten Bereich erkannt wird, wird ein Bremsvorgang ausgelöst.

Der Erfindung liegt daher die Aufgabe zugrunde, ein Verfahren zum Betrieb eines Arbeitsgerätes anzugeben, durch das die Betriebssicherheit und Betriebszuverlässigkeit gesteigert werden, und ein Arbeitsgerät, insbesondere für gewerbliche Anwendungen, anzugeben, durch das die Betriebssicherheit und Betriebszuverlässigkeit gesteigert werden.

Die vorgenannte Aufgabe ist mit einem Verfahren gemäß Anspruch 1 gelöst. Das Arbeitsgerät ist dazu ausgebildet, sich in einer Bearbeitungsumgebung autonom fortzubewegen. Das Verfahren weist zumindest die folgenden Verfahrensschritte auf:
- Erkennen einer sicherheitsrelevanten Betriebssituation unter Verwendung mindestens eines ersten Sensorsystems des Arbeitsgeräts,
- Veranlassen eines Bremsvorgangs, wobei der Bremsvorgang die Verwendung zumindest eines Antriebsmotors des Arbeitsgeräts zur Reduzierung der Geschwindigkeit beinhaltet, wenn eine kritische Betriebssituation erkannt wurde,
- Verarbeiten mindestens eines nach dem Veranlassen des Bremsvorgangs ermittelten Fahrparameters,
- Auswählen zwischen einem Fortsetzen des Bremsvorgangs oder dem Auslösen eines Notbremsvorgangs in Abhängigkeit zumindest von dem verarbeiteten Fahrparameter, und insbesondere
- Betreiben des Arbeitsgeräts auf Basis der Auswahl.

Das Arbeitsgerät ist zur autonomen Fortbewegung in einer Bearbeitungsumgebung und zur Erledigung von Arbeitsausgaben ausgebildet. Beispielsweise ist das Arbeitsgerät als Reinigungsgerät, Transportgerät in der Transportlogistik oder Sicherheitsroboter zur Umgebungsüberwachung ausgebildet.

Vorzugsweise ist das Arbeitsgerät als Reinigungsgerät zum Reinigen einer Bearbeitungsumgebung ausgebildet. Bei dem als Reinigungsgerät ausgebildeten Arbeitsgerät handelt es sich vorteilhaft um ein Reinigungsgerät mit Saug- und/oder Wischfunktion, insbesondere um einen Saugroboter, einen Wischroboter oder einen Saug- und Wischroboter.

Das Verfahren zum Betrieb eines Arbeitsgerätes umfasst das Erkennen einer sicherheitsrelevanten Betriebssituation unter Verwendung mindestens eines Sensorsystems des Arbeitsgeräts. Sicherheitsrelevante Betriebssituationen sind beispielsweise solche Situationen, in denen das für die Navigation des Arbeitsgeräts erforderliche Sensorsystem, insbesondere mindestens ein Sensor des Sensorsystems, beispielsweise das Risiko einer Beschädigung des Arbeitsgeräts und/oder des Verursachens eines Schadens in der Bearbeitungsumgebung durch das Arbeitsgerät erkennt. Dazu ist beispielsweise vorgesehen, dass die Steuereinrichtung des Arbeitsgeräts kontinuierlich Sensorinformationen, beispielsweise Daten, Signale oder Messwerte, verarbeitet und anhand vorbestimmter Kriterien eine sicherheitsrelevante Betriebssituation erkennt. Das Erkennen erfolgt vorteilhaft mittels der Steuereinrichtung.

Wird eine sicherheitsrelevante Betriebssituation von der Steuereinrichtung erkannt, veranlasst die Steuereinrichtung einen Bremsvorgang. Der Bremsvorgang umfasst das Reduzieren einer Geschwindigkeit des Arbeitsgeräts unter Verwendung mindestens eines Antriebsmotors des Arbeitsgeräts. Vorzugsweise ist vorgesehen, dass das Arbeitsgerät mindestens zwei Antriebseinheiten aufweist, die jeweils mindestens einen Antriebsmotor, ein Getriebe und ein Antriebsrad aufweisen. Das Antriebsrad ist von dem Antriebsmotor antreibbar. Beispielsweise ist vorgesehen, dass das Veranlassen des Bremsvorgangs das Ansteuern mindestens eines Antriebsmotors oder aller Antriebsmotoren beinhaltet, derart dass sich der Antriebsmotor oder die Antriebsmotoren entgegen der aktuellen Fahrtrichtung bewegt bzw. bewegen. Üblicherweise erfolgt ein derartiges Ansteuern mit einem entsprechenden Steuerbefehl bzw. Steuersignal an die Antriebsmotoren. Ein in Bewegung befindlicher Antriebsmotor ist aufgrund der Massenträgheit allerdings nach einem entsprechenden Steuersignal nicht in der Lage, unverzüglich seine Bewegung zu stoppen oder sich in entgegengesetzter Richtung zu bewegen, wodurch ein gewisser Zeitverzug entsteht.

Nach dem Veranlassen des Bremsvorgangs durch die Steuereinrichtung erfolgt das Verarbeiten mindestens eines nach dem Veranlassen des Bremsvorgangs ermittelten Fahrparameters. Bei dem Fahrparameter kann es sich beispielsweise um eine Geschwindigkeit und/oder eine Bewegungsrichtung und/oder einen anderen Fahrparameter handeln. Als Fahrparameter sind insbesondere alle Parameter geeignet, die den Bewegungszustand des Arbeitsgerätes und/oder die einen Bezug zwischen der Fortbewegung des Arbeitsgeräts und der Umgebung des Arbeitsgeräts herstellen.

In Abhängigkeit von dem verarbeiteten Fahrparameter, also beispielsweise einer nach dem Beginn des Bremsvorgangs erfassten Geschwindigkeit, bzw. einem Resultat der Verarbeitung, erfolgt eine Auswahl durch die Steuereinrichtung, bei der zwischen einem Fortsetzen des Bremsvorgangs oder dem Aktivieren eines Notbremsvorgangs entschieden wird.

Das Fortsetzen des Bremsvorgangs wird beispielsweise dann ausgewählt, wenn unter der Verwendung zumindest des verarbeiteten Fahrparameters von der Steuereinrichtung bewertet werden kann, dass der Eintritt eines Schadensereignisses, beispielsweise eine Kollision oder ein Absturz des Arbeitsgeräts, verhindert wird. Das Verhindern erfolgt dadurch, dass der Bremsvorgang zu einem vollständigen Anhalten des Arbeitsgeräts vor Eintritt des Schadensereignisses führt.

Bewertet die Steuereinrichtung unter Verwendung des verarbeiteten Fahrparameters die Situation so, dass der Bremsvorgang nicht zu einem rechtzeitigen Anhalten des Arbeitsgeräts führt, also der Eintritt des Schadensereignisses nicht durch den Bremsvorgang verhindert werden kann, erfolgt die Auswahl des Auslösens eines Notbremsvorgangs. Nach der Auswahl erfolgt ein Betreiben des Arbeitsgeräts auf Basis der Auswahl, also entweder wird der Bremsvorgang fortgesetzt oder der Notbremsvorgang ausgelöst.

Vorzugsweise ist das Arbeitsgerät derart eingerichtet, dass es nach Auslösen des Notbremsvorgangs und nach vollständigem Anhalten eine Sicherheitsabschaltung durchführt, die insbesondere nur manuell von einem Benutzer deaktiviert werden kann.

Um Sicherheitsanforderungen zu erfüllen, ist vorteilhaft - wie vorstehend ausgeführt - vorgesehen, dass Arbeitsgeräte nach Durchführen eines Notbremsvorgangs eine Sicherheitsabschaltung vornehmen, die einen normalen Betrieb nicht mehr erlaubt, und die durch einen Benutzer deaktiviert werden muss. Dadurch wird sichergestellt, dass die Ursache der sicherheitsrelevanten Betriebssituation vor der Wiederaufnahme des Betriebs durch einen Benutzer beseitigt worden ist bzw. das Arbeitsgerät wieder in ein sicheres Umfeld verbracht worden ist.

Die Erfindung hat gegenüber dem Stand der Technik den Vorteil, dass nicht jede von der Steuereinrichtung erkannte sicherheitsrelevante Situation zu einem Nothalt des Arbeitsgeräts führt, der eine Sicherheitsabschaltung und eine Interaktion mit einem Benutzer erfordert. Gemäß der vorliegenden Erfindung ist nämlich vorgesehen, dass die Effektivität der getroffenen Maßnahme, hier des Bremsvorgangs, während des Bremsvorgangs anhand von Fahrparametern überprüft wird, um im Rahmen einer weiteren Eskalationsstufe den Notbremsvorgang auslösen zu können. Durch dieses stufenweise Vorgehen wird die Autonomie des Arbeitsgeräts gesteigert und es werden vermeidbare Interaktionen zwischen einem Benutzer und dem Arbeitsgerät auf ein Minimum reduziert.

Eine erste Ausgestaltung des Verfahrens sieht vor, dass das Erkennen einer sicherheitsrelevanten Betriebssituation unter Verwendung von Sensorinformationen mindestens eines Sensors oder einer Mehrzahl von Sensoren des Sensorsystems erfolgt. Das Sensorsystem des Arbeitsgeräts ist beispielsweise derart ausgebildet, dass sich das Arbeitsgerät unter Verwendung des Sensorsystems in einer Bearbeitungsumgebung autonom bewegen kann. Das Sensorsystem ist vorzugsweise redundant ausgebildet, um den Ausfall eines Sensors oder einzelner Sensoren ausgleichen zu können, ohne die Sicherheit des Betriebs des Arbeitsgeräts zu gefährden. Bei den Sensorinformationen handelt es sich beispielsweise um Daten, Signale oder Messwerte mindestens eines Sensors oder mehrerer Sensoren.

Vorzugsweise erfolgt das Erkennen einer sicherheitsrelevanten Betriebssituation unter Verwendung mindestens eines Sturzsensors und/oder mindestens eines Kollisionssensors. Beispielsweise weist das Arbeitsgerät eine Mehrzahl von Sturzsensoren auf, die vorteilhaft als Abstandssensoren ausgebildet sind und an der Unterseite des Gehäuses verteilt angeordnet sind. Die Sturzsensoren erfassen kontinuierlich den Abstand des Gehäuses zu einer Oberfläche, z. B. eines Hallenbodens, auf der sich das Arbeitsgerät bewegt. Wird eine signifikante Steigerung des Abstands erkannt, kann der Sturzsensor oder die Steuereinrichtung daran eine Stufe in der Oberfläche, beispielsweise das Ende einer Plattform oder einen anderen Absatz erkennen, die für das Arbeitsgerät ein Absturzrisiko darstellen könnte.

Es ist vorgesehen, dass der Sturzsensor beispielsweise als optischer Sensor, als akustischer Sensor oder anderer Sensor ausgebildet ist, der geeignet ist, einen Abstand zu einer Oberfläche zu messen. Dabei hat sich die Verwendung von nicht bildgebenden Sensoren, mit denen ein Abstand bestimmbar ist, als vorteilhaft herausgestellt, da deren Messwerte schneller und eindeutiger verarbeitbar sind als beispielsweise die Messwerte von bildgebenden Sensoren. Der daraus resultierende Zeitgewinn kann insbesondere bei sicherheitsrelevanten Funktionen entscheidend sein.

Ein Kollisionssensor weist beispielsweise einen bildgebenden Sensor und/oder einen Laserabstandssensor auf. Mit dem Kollisionssensor ist vorteilhaft kontinuierlich die Umgebung des Arbeitsgeräts, beispielsweise in mindestens einer Ebene, erfassbar und Hindernisse können erkannt bzw. Abstände zu Hindernissen bestimmt bzw. berechnet werden. Vorzugsweise ist der Kollisionssensor auch zur Kartierung der Bearbeitungsumgebung geeignet, indem die Sensorinformationen gespeichert und insbesondere mit Positionsdaten verknüpft werden. Auch mittels eines Kollisionssensors bzw. einer Mehrzahl an Kollisionssensoren können sicherheitsrelevante Betriebssituationen erkannt werden, beispielsweise dann, wenn sich ein Mensch, ein Fahrzeug oder ein anderes Arbeitsgerät schnell auf das Arbeitsgerät zu bewegt oder dessen Fahrweg kreuzt.

Um vorteilhaft den Erfolg des Bremsvorgangs bewerten zu können, hat es sich gemäß einer weiteren Ausgestaltung des Verfahrens als vorteilhaft herausgestellt, wenn vorgesehen ist, dass als Fahrparameter zumindest eine Geschwindigkeit und/oder eine Bewegungsrichtung und/oder ein Abstand zu einem Hindernis und/oder ein Abstand zu einer Stufe in der Bearbeitungsumgebung und/oder ein Abstand des Schwerpunkts des Arbeitsgeräts zu einer Stufe verarbeitet wird. Der Fahrparameter wird derart verarbeitet, dass der Steuereinrichtung eine Bewertung der Erfolgsaussichten des Bremsvorgangs möglich ist. Beispielsweise ist auch vorgesehen, dass eine Mehrzahl der vorgenannten Fahrparameter verarbeitet werden, um den voraussichtlichen Erfolg des Bremsvorgangs bewerten zu können.

Vorzugsweise ist vorgesehen, dass mindestens ein Fahrparameter, beispielsweise die Geschwindigkeit, nach Ablauf einer vorbestimmten Zeit nach dem Veranlassen des Bremsvorgangs ermittelt wird. Dazu erfolgt mit dem Veranlassen des Bremsvorgangs der Start einer Zeitmessung durch die Steuereinrichtung. Nach Ablauf der vorbestimmten Zeit wird bzw. werden mindestens ein oder mehrere Fahrparameter ermittelt und verarbeitet, um die Auswahl zwischen dem Fortsetzen des Bremsvorgangs oder dem Aktivieren des Notbremsvorgangs treffen zu können.

Es ist insbesondere vorgesehen, dass die vorbestimmte Zeit, also der Zeitraum nach dem Veranlassen des Bremsvorgangs, nach dem der oder die Fahrparameter ermittelt wird bzw. ermittelt werden, so gewählt ist, dass bei unverminderter Geschwindigkeit des Arbeitsgeräts ein Schadensereignis noch nicht eingetreten ist. Beispielsweise wird dazu beim Verarbeiten der Abstand zu einem Hindernis oder der Abstand zu einer Stufe von der Steuereinrichtung für die Festlegung bzw. Auswahl der Zeit, beispielsweise aus einer Vielzahl von in einem Speicher vorgehaltenen Zeiten, berücksichtigt. Für den Fall, dass die kritische Betriebssituation unter Verwendung eines Sturzsensors erkannt wurde, ist insbesondere vorgesehen, dass die Zeit so festgelegt bzw. ausgewählt wird, dass der Schwerpunkt des Arbeitsgeräts eine Stufe noch nicht überschritten hat.

Alternativ dazu ist bevorzugt auch vorgesehen, dass die Zeit, nach der nach Beginn des Bremsvorgangs mindestens ein oder mehrere Fahrparameter ermittelt wird bzw. ermittelt werden, als fester Zeitraum festgelegt ist, beispielsweise eine Zeit zwischen 3 Millisekunden und 15 Millisekunden. Als besonders vorteilhaft hat sich ein Zeitraum zwischen 5 Millisekunden und 10 Millisekunden erwiesen. Nach diesem Zeitablauf kann üblicherweise bereits eine hinreichende Bewertung des voraussichtlichen Erfolgs des Bremsvorgangs vorgenommen werden.

Insbesondere ist vorgesehen, dass der oder die Fahrparameter mit einem Sensor oder mehreren Sensoren des Sensorsystems des Arbeitsgeräts ermittelt werden, die ohnehin für die Realisierung der autonomen Navigation des Arbeitsgeräts in dem Arbeitsgerät vorhanden sind. Beispielsweise ist gemäß einer weiteren Ausgestaltung vorgesehen, dass das Ermitteln der aktuellen Geschwindigkeit als Fahrparameter unter Verwendung eines Wegmesssensors erfolgt. Beispielsweise umfasst der Wegmesssensor mindestens einen Geber oder eine Mehrzahl von Gebern in mindestens einem Antriebsrad, vorzugsweise in jedem vorhandenen Antriebsrad. Alternativ oder zusätzlich dazu ist vorgesehen, dass das Ermitteln der Geschwindigkeit unter Verwendung einer Trägheitsmesseinheit und/oder eines Gyrosensors erfolgt.

Ferner ist vorgesehen, dass das Verarbeiten des mindestens einen Fahrparameters oder das Verarbeiten einer Mehrzahl von Fahrparametern das Abgleichen mindestens eines Fahrparameters mit mindestens einem in einem Speicher bereitgehaltenen Fahrparameter-Sollwert umfasst. Die Fahrparameter-Sollwerte werden beispielsweise in einem Speicher der Steuereinrichtung bereitgehalten. Der ermittelte Fahrparameter wird im Rahmen des Verarbeitens beispielsweise mit einem für vergleichbare Situationen ermittelten Fahrparameter-Sollwert verglichen. Wenn der aktuell ermittelte Fahrparameter beispielsweise größer als der Fahrparameter-Sollwert ist, kann das beispielsweise ein Kriterium dafür sein, dass der Bremsvorgang nicht zur Verhinderung des Schadensereignisses führen wird, so dass auf dieser Basis dann eine Auswahl des Aktivierens der Notbremsfunktion erfolgen kann.

Wenn der aktuell ermittelte Fahrparameter beispielsweise kleiner als der für den Abgleich herangezogene Fahrparameter-Sollwert ist, kann das ein Kriterium dafür sein, dass der Bremsvorgang das Schadensereignis verhindern wird. Der Fahrparameter-Sollwert kann beispielsweise eine Geschwindigkeit repräsentieren, die bei einem ebenfalls ermittelten Abstand zu einem Hindernis oder zu einer Stufe zu diesem Zeitpunkt bereits erreicht sein muss, um einen ein Schadensereignis verhindernden Bremsvorgang vor Erreichen des Hindernisses oder der Stufe zu realisieren.

Besonders bevorzugt ist vorgesehen, dass das Verarbeiten des zumindest einen Fahrparameters das Abgleichen der Geschwindigkeit nach einer vorbestimmten Zeit nach Veranlassen des Bremsvorgangs mit mindestens einem in einem Speicher abgelegten Geschwindigkeits-Sollwert als Fahrparameter-Sollwert beinhaltet. Beispielsweise ist vorgesehen, dass mindestens ein im Speicher bereitgehaltener Fahrparameter-Sollwert zumindest eine prozentuale Reduzierung einer Ausgangsgeschwindigkeit (beispielsweise der Geschwindigkeit zu Beginn des Bremsvorgangs) nach einer vorbestimmten Zeit repräsentiert. Vorteilhaft ist der Fahrparameter-Sollwert so festgelegt oder empirisch ermittelt, dass nach einer vorbestimmten Zeit eine vorbestimmte prozentuale Reduzierung der Ausgangsgeschwindigkeit erfolgt sein muss, um bewerten zu können, dass der Bremsvorgang zu einer Verhinderung des Schadensereignisses führen wird.

Als besonders vorteilhaft hat sich jedoch herausgestellt, wenn gemäß einer weiteren Ausgestaltung vorgesehen ist, dass unterschiedliche Fahrparameter-Sollwerte für unterschiedliche Konfigurationen des Arbeitsgeräts im Speicher bereitgehalten werden, und dass das Verarbeiten des Fahrparameters, also das Abgleichen mit den gespeicherten Fahrparameter-Sollwerten unter Berücksichtigung einer aktuellen Konfiguration des Arbeitsgeräts erfolgt. Die Konfiguration des Arbeitsgeräts, also beispielsweise die tatsächliche Dimension des Gehäuses, aber auch die Anzahl von eingesetzten Energiespeichern beeinflussen beispielsweise den Anhalteweg eines Arbeitsgeräts nach Veranlassen eines Bremsvorgangs.

Es ist vorgesehen, dass das Arbeitsgerät beispielsweise seine aktuelle Konfiguration, beispielsweise mittels Sensoren, erfasst und bei dem Verarbeiten des Fahrparameters berücksichtigt, insbesondere die Auswahl der zur vergleichenden Fahrparameter-Sollwerte derart trifft, dass die Fahrparameter-Sollwerte für die gerade vorliegende Konfiguration für die Verarbeitung herangezogen werden. Die Fahrparameter-Sollwerte sind beispielsweise für verschiedene Randbedingungen, z. B. Anhaltewege für unterschiedliche Gewichte oder Geschwindigkeiten, empirisch ermittelt worden oder für verschiedenen Randbedingungen rechnerisch bestimmt oder durch Simulation ermittelt worden.

Alternativ oder zusätzlich dazu ist vorgesehen, dass unterschiedliche Fahrparameter-Sollwerte für unterschiedliche Bearbeitungsumgebungen im Speicher bereitgehalten werden. Beispielsweise weisen Bearbeitungsumgebungen, insbesondere die Oberflächen, unterschiedliche Eigenschaften auf, die im Zusammenwirken mit den Antriebsrädern des Arbeitsgeräts unterschiedliche Reibungseigenschaften haben. Diese wiederum haben einen Einfluss auf den Anhalteweg, so dass es auch vorgesehen ist, dass für das Abgleichen in Abhängigkeit von der Bearbeitungsumgebung, in der das Arbeitsgerät aktuell eingesetzt wird, unterschiedliche Fahrparameter-Sollwerte herangezogen werden. So kann der Einfluss von besonders glatten oder besonders rauen Bodenbelägen auf den Anhalteweg bei der Bewertung des Erfolgs des Bremsvorgangs berücksichtigt werden.

Vorteilhaft sieht eine weitere Ausgestaltung vor, dass die unterschiedlichen Konfigurationen des Arbeitsgeräts unterschiedliche Gehäuse-Dimensionen und/oder die Lage des Schwerpunkts im Gehäuse und/oder das Vorhandensein eines an dem Arbeitsgerät montierten Zubehörbauteils und/oder den Füllstand eines Reinigungswasserbehälters und/oder den Füllstand eines Schmutzsammelbehälters berücksichtigen. Beispielsweise erkennt das Arbeitsgerät, dass ein Zubehörbauteil, beispielsweise ein Werkzeug, ein Wassertank oder ähnliches am Gehäuse montiert ist, wodurch sich die Lage des Schwerpunkts des Arbeitsgeräts verändert. Für den Abgleich im Rahmen des Verarbeitens werden dann andere Fahrparameter-Sollwerte verwendet, als wenn das Zubehör-Bauteil, ein zusätzlicher Akku oder ähnliches nicht vorhanden wäre. Gleiches gilt für den Füllstand eines Reinigungswasserbehälters oder den Füllstand eines Schmutzsammelbehälters, die beide die Lage des Schwerpunktes im Gehäuse beeinflussen.

Wenn beispielsweise der Absturz an einer Stufe verhindert werden soll, kann die Lage des Schwerpunktes im Gehäuse des Arbeitsgeräts einen wesentlichen Einfluss darauf haben, wieviel Zeit für den Bremsvorgang bleibt, bevor der Schwerpunkt über die Stufe hinweggetreten ist. Die Kenntnis, insbesondere der Lage des Schwerpunktes des Arbeitsgeräts im Gehäuse, hat folglich einen wesentlichen Einfluss auf die Bewertung, ob der Bremsvorgang den Eintritt eines Schadensereignisses verhindern wird oder nicht. Vorzugsweise werden für alle diese Konfigurationen oder eine Kombination daraus separate Fahrparameter-Sollwerte im Speicher bereitgehalten.

Es ist auch vorgesehen, dass für bestimmte Konfigurationen Gewichtungsfaktoren bereitgehalten werden. Für jede Fahrsituation, z. B als Kombination aus Geschwindigkeit und Abstand zum Hindernis, gibt es beispielsweise nur einen Fahrparameter-Sollwert, der allerdings dann von der Steuereinrichtung unter Berücksichtigung von Gewichtungsfaktoren, die die Konfiguration des Arbeitsgerätes repräsentieren, neu berechnet oder angepasst wird. Es ist auch vorgesehen, dass ein oder mehrere Gewichtungsfaktoren auf den Fahrparameter angewendet werden, wenn dieser verarbeitet wird.

Eine weitere Ausgestaltung sieht vor, dass im Rahmen des Verarbeitens, insbesondere als Ergebnis des Verarbeitens, ein Auswahl- oder Ergebniswert generiert wird, und dass der Auswahlwert eine Aussage darüber repräsentiert, ob das Eintreten eines aus der sicherheitsrelevanten Betriebssituation resultierenden Schadensereignisses durch den Bremsvorgang verhindert werden kann. Auf Basis des Auswahlwertes erfolgt dann durch die Steuereinrichtung die Auswahl, ob der Notbremsvorgang aktiviert wird oder der Bremsvorgang fortgesetzt werden kann. Nach der Auswahl erfolgt ein Betrieb des Arbeitsgeräts mit dem ausgewählten Vorgang.

Ferner ist gemäß einer weiteren Ausgestaltung vorgesehen, dass das Verarbeiten des Fahrparameters die Bestimmung einer Wahrscheinlichkeit beinhaltet, insbesondere einer Wahrscheinlichkeit, die das Verhindern eines Schadensereignisses mit dem Bremsvorgang oder den Eintritt des Schadensereignisses bei Fortsetzen des Bremsvorgangs repräsentiert. Beispielsweise ist vorgesehen, dass die Auswahl dann auf Basis der ermittelten Wahrscheinlichkeit erfolgt. Insbesondere ist vorab definiert worden, bei welcher Wahrscheinlichkeit der Bremsvorgang fortgesetzt wird und bei welcher Wahrscheinlichkeit die Notbremsfunktion aktiviert wird. Es ist vorgesehen, dass beim Bestimmen der Wahrscheinlichkeit mindestens ein Fahrparameter oder eine Mehrzahl an Fahrparametern berücksichtigt wird/werden. Der oder die Fahrparameter beinhalten z. B. die aktuelle Geschwindigkeit, den Verlauf einer Geschwindigkeit und/oder den Abstand zu Hindernissen oder Stufen. Ferner kann dabei die aktuelle Konfiguration des Arbeitsgeräts berücksichtigt werden.

Wie bereits beschrieben, erfolgt das Auswählen der Aktivierung des Notbremsvorgangs dann, wenn in Abhängigkeit von der Verarbeitung des Fahrparameters oder einer Mehrzahl von Fahrparametern der Eintritt eines Schadensereignisses mit dem Bremsvorgang nicht verhindert werden kann, also die Bewertung ergibt, dass der Bremsvorgang voraussichtlich nicht erfolgreich sein wird.

Das Auswählen der Fortsetzung des Bremsvorgangs erfolgt dann, wenn die Bewertung im Rahmen des Verarbeitens des Fahrparameters ergibt, dass der Eintritt eines Schadensereignisses mit dem Bremsvorgang verhindert werden kann. Vorzugsweise ist vorgesehen, dass der Bremsvorgang nach einer Auswahl des Fortsetzens des Bremsvorgangs bis zu einem vollständigen Stillstand des Arbeitsgeräts fortgesetzt wird. Beispielsweise wird nach dem vollständigen Anhalten mit dem Sensorsystem des Arbeitsgeräts die Umgebung des Arbeitsgeräts analysiert. Wenn keine kritische Betriebssituation mehr vorliegt, kann nach dem Stillstand des Arbeitsgeräts ein Betrieb unter Vermeidung des Eintritts des Schadensereignisses fortgesetzt werden.

Wenn es sich bei der kritischen Betriebssituation beispielsweise um eine Stufe handelt, wird das Arbeitsgerät angehalten, bevor der Schwerpunkt über die Stufe hinausragt. Nachfolgend kann beispielsweise die Bewegungsrichtung geändert und der Reinigungsvorgang insbesondere parallel zur Stufe fortgesetzt werden. Die Steuereinheit ist insbesondere derart ausgebildet und eingerichtet, dass eine erkannte, sicherheitsrelevante Betriebssituation zumindest temporär gespeichert werden kann. Das Speichern der Betriebssituation hat vorzugsweise die Auswirkung, dass die Ursache, beispielsweise eine Stufe, für den weiteren Betrieb bzw. die weitere Erledigung einer Bearbeitungsaufgabe zumindest temporär unberücksichtigt bleibt, da z. B. ein Richtungswechsel vollzogen worden ist und nun eine Bewegung parallel zur Stufe erfolgt. Beispielsweise werden dadurch die Sensorinformationen mindestens eines Sensors zumindest temporär nicht berücksichtigt, insbesondere für die Erkennung von sicherheitsrelevanten Betriebssituationen. So meldet bei einer Fortbewegung parallel zu einer Stufe ein seitlich angeordneter Sturzsensor weiterhin die Stufe, das Steuergerät kann diese Sensorinformation durch das abgespeicherte Ereignis und den erfolgten Richtungswechsel jedoch als unkritisch bewerten und den Betrieb fortsetzen.

Dadurch ergibt sich aus dem Stand der Technik der Vorteil, dass das Arbeitsgerät sehr nah an Gebäudekanten, beispielsweise Stufen, betrieben werden kann, ohne dass ein Notbremsvorgang aktiviert wird. Durch dieses angepasste Verhalten ergibt sich eine größere Autonomie des Arbeitsgeräts bei gleichzeitig erweitertem Arbeitsspektrum.

Als vorteilhaft hat sich gemäß einer weiteren Ausgestaltung herausgestellt, wenn das Veranlassen des Bremsvorgangs das Ansteuern mindestens eines Antriebsmotors, insbesondere aller Antriebsmotoren, mit einem Steuerbefehl umfasst, der den Antriebsmotor oder die Antriebsmotoren veranlasst, eine Fahrbewegung auszuführen, die eine Reduzierung der Geschwindigkeit des Arbeitsgeräts zum Ziel hat. Insbesondere ist das schnellstmögliche Reduzieren der Geschwindigkeit des Arbeitsgeräts bis zum Stillstand das Ziel. Beispielsweise wird der Antriebsmotor bzw. werden die Antriebsmotoren dazu angesteuert, eine Fahrbewegung entgegen der aktuellen Bewegungsrichtung auszuführen. Alternativ dazu ist vorgesehen, dass das Veranlassen des Bremsvorgangs ein Unterbrechen der Spannungsversorgung des Antriebsmotors oder der Antriebsmotoren beinhaltet.

Als besonders vorteilhaft hat sich ferner herausgestellt, wenn vorgesehen ist, dass das Auslösen einer Notbremsfunktion das Auslösen eines separaten Notbremssystems beinhaltet. Insbesondere ist das Notbremssystem derart ausgebildet, dass nach einem Auslösen das mechanische Bewirken einer Bremskraft mit mindestens einem Bremselement zumindest mittelbar auf ein sich bewegendes Bauteil bewirkt wird. Das sich bewegende Bauteil dient vorzugsweise der Bewirkung eines Bewegens des Arbeitsgeräts, beispielsweise ein Rotor eines Motors, eine Motorwelle oder ein Bauteil eines Getriebes. Es ist auch vorgesehen, dass an der Motorwelle mindestens ein Bremsring angeordnet ist, und dass das Bremselement zum Einwirken auf den Bremsring ausgebildet ist. Durch das mechanische Einwirken des Bremselements auf ein sich bewegendes, insbesondere rotierendes Bauteil, kann eine Antriebseinheit des Arbeitsgeräts unverzüglich gebremst bzw. blockiert werden.

Bevorzugt ist vorgesehen, dass jede Antriebseinheit mindestens ein Bremselement aufweist, das vorzugsweise auf einen außenliegenden Rotor eines Motors, zumindest mittelbar auf eine Motorwelle oder auf einen an einer Motorwelle angeordneten Bremsring einwirkt. Dadurch kann mit einer verhältnismäßig geringen Betätigungskraft ein großer Effekt zum Bremsen des Arbeitsgeräts bewirkt werden. Vorzugsweise weist das Arbeitsgerät zwei Antriebseinheiten auf, die jeweils ein Bremselement aufweisen. Es ist auch vorgesehen, dass ein Bremselement unmittelbar auf die Lauffläche oder eine andere Fläche eines Antriebsrades einwirkt, um eine Bewegung des Antriebsrades zu hemmen, zu stoppen oder zu blockieren.

Eine weitere Ausgestaltung des Verfahrens sieht vor, dass das Arbeitsgerät mindestens zwei Antriebseinheiten mit jeweils einem Bremselement aufweist. Jede Antriebseinheit weist beispielsweise einen Antriebsmotor, ein Getriebe und ein Antriebsrad auf. Das Bremselement ist beispielsweise zum Einwirken auf einen außenliegenden Rotor des Motors oder zumindest mittelbar auf eine Motorwelle ausgebildet. Beispielsweise ist vorgesehen, dass das Bremselement von einer Feder stets in Richtung der Oberfläche des Rotors bzw. der Motorwelle gedrängt wird, so dass das Notbremssystem im spannungsfreien Zustand aktiviert wird.

Ferner ist mindestens ein Aktor vorgesehen, der das Bremselement in eine Freigabeposition bewegt, wenn das Arbeitsgerät im Normalzustand betrieben werden soll. Dadurch wird ein für Fehler weniger anfälliges Notbremssystem realisiert.

Insbesondere ist vorgesehen, dass das Auslösen einer Notbremsfunktion selektiv für mindestens eine Antriebseinheit erfolgt. Dadurch kann neben einem Abbremsen des Arbeitsgeräts auch ein kurzfristiger Richtungswechsel erzeugt werden. Wird beispielsweise eine Antriebseinheit durch die Notbremsfunktion vollständig blockiert, kann dies zu einer Rotation, also einem unmittelbaren Richtungswechsel des Arbeitsgeräts, führen, der den Eintritt eines schädigenden Ereignisses, beispielsweise den Absturz an einer Kante, dadurch verhindert, dass sich das Arbeitsgerät in eine andere Richtung fortbewegt.

Als besonders vorteilhaft hat sich bei einer Ausgestaltung des Verfahrens herausgestellt, wenn bei dem Verfahren ferner folgende Verfahrensschritte umfasst sind:
- Messen der Zeit nach Veranlassung des Bremsvorgangs;
- Bestimmen der aktuellen Geschwindigkeit nach Ablauf einer vorbestimmten Zeit, beispielsweise 5 ms, 8 ms oder 10 ms, nach dem Veranlassen des Bremsvorgangs, wobei die vorbestimmte Zeit so gewählt ist, dass ein Schadensereignis auch ohne Reduzierung der Geschwindigkeit noch nicht eingetreten ist, beispielsweise der Schwerpunkt des Arbeitsgeräts eine Stufe noch nicht überschritten hat;
- Abgleichen der aktuellen Geschwindigkeit mit mindestens einem in einem Speicher bereitgehaltenen Geschwindigkeits-Sollwert, wobei der Geschwindigkeits-Sollwert unter Berücksichtigung einer bestimmten Arbeitsgerätekonfiguration bestimmt wurde, die der aktuellen Arbeitsgerätekonfiguration entspricht, und wobei das Ergebnis des Abgleichs eine Bewertung durch die Steuereinrichtung zulässt, ob das Schadensereignis mit dem Bremsvorgang verhindert werden kann oder nicht. Kann das Schadensereignis verhindert werden, wird der Bremsvorgang fortgesetzt, kann das Schadensereignis nicht verhindert werden, wird die Notbremsfunktion ausgelöst.

Die eingangs genannte Aufgabe ist ferner gelöst durch ein Arbeitsgerät, das zur Ausführung eines Verfahrens gemäß mindestens einem der vorstehend beschriebenen Ausführungsbeispiele ausgebildet und eingerichtet ist. Vorzugsweise ist die Steuereinrichtung des Arbeitsgeräts derart ausgebildet und eingerichtet, dass ein vorbeschriebenes Verfahren durch die Steuereinrichtung mit dem Arbeitsgerät ausführbar ist. Das Arbeitsgerät weist mindestens ein Gehäuse, mindestens eine Antriebseinheit, mindestens ein Sensorsystem und mindestens eine Steuereinrichtung auf. Die Antriebseinheit weist mindestens einen Antriebsmotor und mindestens ein Antriebsrad auf. Vorzugsweise weist die Antriebseinheit auch ein Getriebe auf. Das Arbeitsgerät ist dazu ausgebildet und eingerichtet, sich in einer Bearbeitungsumgebung autonom fortzubewegen.

Das Sensorsystem weist mindestens einen Sensor oder eine Mehrzahl an Sensoren auf. Das Sensorsystem ist vorteilhaft zur Bereitstellung von Sensorinformationen ausgebildet. Die Steuereinrichtung steuert das autonome Bewegen und Reinigen einer Bearbeitungsumgebung durch das Reinigungsgerät. Die Steuereinrichtung weist vorzugsweise mindestens eine Datenverarbeitungseinrichtung mit mindestens einem Prozessor und mindestens einem Speicher auf.

Vorzugsweise weist das Arbeitsgerät mindestens eine zweite Steuereinrichtung auf. Die zweite Steuereinrichtung weist vorteilhaft mindestens eine Datenverarbeitungseinrichtung mit mindestens einem Prozessor und mindestens einem Speicher auf. Die zweite Steuereinrichtung ist dazu ausgebildet und eingerichtet, zumindest einen Teil der Aufgaben oder alle Aufgaben der ersten Steuereinrichtung als redundantes System zu übernehmen, sofern eine Fehlfunktion bei der ersten Steuereinrichtung vorliegt.

An dem Gehäuse des Arbeitsgeräts sind beispielsweise mindestens oder genau zwei Antriebseinheiten angeordnet, die jeweils mindestens einen Antriebsmotor, insbesondere einen Elektromotor, und mindestens ein Antriebsrad aufweisen. Der Antriebsmotor ist vorzugsweise ein bürstenloser Gleichstrommotor, insbesondere ein als Außenläufer ausgebildeter, bürstenloser Gleichstrommotor. Die beiden Antriebsmotoren der Antriebseinheiten sind unabhängig voneinander ansteuerbar. Jeder Antriebsmotor treibt zumindest mittelbar mindestens oder genau ein Antriebsrad an. Es ist beispielsweise auch vorgesehen, dass zwischen Antriebsmotor und Antriebsrad einer Antriebseinheit ein Getriebe angeordnet ist.

Des Weiteren weist das Arbeitsgerät mindestens einen Energiespeicher auf, der zur Spannungsversorgung des Arbeitsgerätes, insbesondere zur Spannungsversorgung der Steuereinrichtung und insbesondere eines Arbeitswerkzeugs, insbesondere eines Reinigungswerkzeugs, ausgebildet und im Gehäuse elektrisch verschaltet ist. Beispielsweise ist der Energiespeicher als Akkumulator mit mindestens einer Zelle, insbesondere einer Mehrzahl von Zellen, ausgebildet.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Arbeitsgeräts in einer Bearbeitungsumgebung,
- Fig. 2: ein Ausführungsbeispiel eines schematischen Ablaufs eines Verfahrens und
- Fig. 3: ein weiteres Ausführungsbeispiel eines schematischen Ablaufs eines Verfahrens.

**In** den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

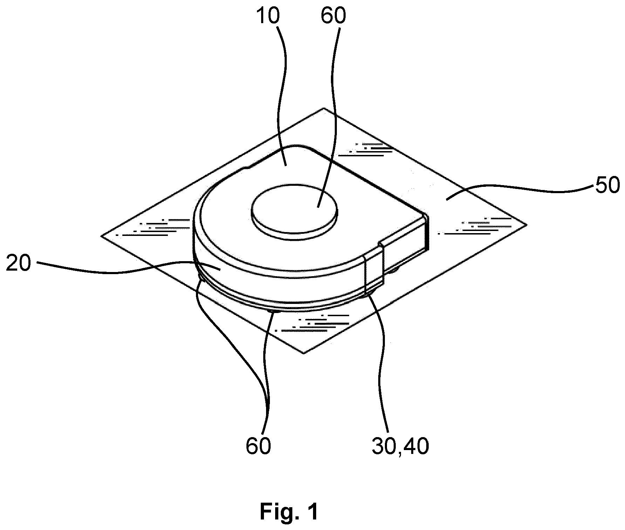

Fig. 1 zeigt ein Ausführungsbeispiel eines als Reinigungsroboter ausgebildeten Arbeitsgeräts 10. Das Arbeitsgerät 10 weist mindestens ein Gehäuse 20 mit zwei Antriebseinheiten 30 und mindestens eine Steuereinrichtung auf. Die Antriebseinheit 30 weist mindestens einen Antriebsmotor und mindestens ein Antriebsrad 40 auf.

Das Arbeitsgerät 10 ist dazu ausgebildet und eingerichtet, sich in einer Bearbeitungsumgebung 50 autonom fortzubewegen. Das Arbeitsgerät 10 weist ein Sensorsystem 60 auf.

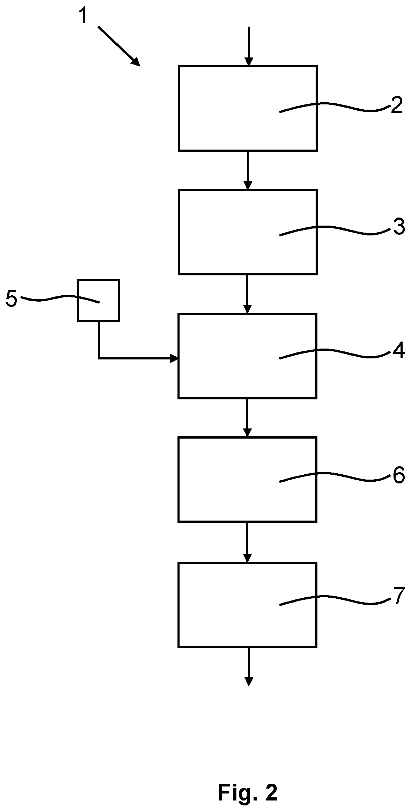

Fig. 2 zeigt ein Ausführungsbeispiel eines schematischen Ablaufs eines Verfahrens 1 zum Betrieb eines Arbeitsgeräts 10. Das Verfahren 1 umfasst das Erkennen 2 einer sicherheitsrelevanten Betriebssituation unter Verwendung mindestens eines Sensorsystems 60 des Geräts 10. Beispielsweise wird mit einem Sturzsensor erkannt, dass sich das Arbeitsgerät 10 an einer Stufe in der Bearbeitungsumgebung 50 befindet bzw. sich auf eine Stufe zu bewegt. Nachfolgend erfolgt das Veranlassen 3 eines Bremsvorgangs, bei dem mindestens ein Antriebsmotor des Arbeitsgeräts 10 mit einem Fahrbefehl angesteuert wird, sich entgegen der aktuellen Bewegungsrichtung zu bewegen, um das Arbeitsgerät 10 zu bremsen.

Nach dem Veranlassen 3 des Bremsvorgangs erfolgt ein Verarbeiten 4 mindestens eines nach dem Veranlassen 3 des Bremsvorgangs erfassten Fahrparameters 5 und anschließend ein Auswählen 6 zwischen einem Fortsetzen des Bremsvorgangs oder dem Aktivieren eines Notbremsvorgangs in Abhängigkeit zumindest von dem verarbeiteten Fahrparameter 5. Abschließend erfolgt das Betreiben 7 des Arbeitsgeräts 10 auf Basis der Auswahl, nämlich das Fortsetzen des Bremsvorgangs oder das Aktivieren des Notbremsvorgangs. Das Verfahren wird vorzugsweise im Betrieb eines Arbeitsgeräts 10 kontinuierlich durchgeführt. Mit dem Sensorsystem 60 wird dazu im Betrieb die Bearbeitungsumgebung 50 überwacht.

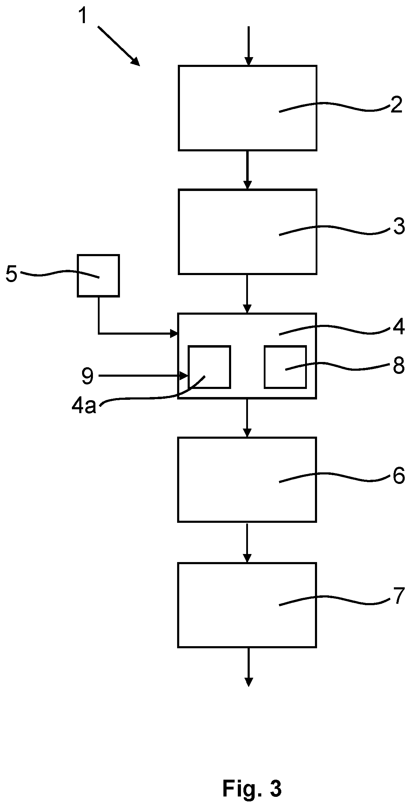

Fig. 3 zeigt ein weiteres Ausführungsbeispiel eines schematischen Ablaufs eines Verfahrens 1. Zunächst erfolgt wieder das Erkennen 2 einer sicherheitsrelevanten Betriebssituation unter Verwendung mindestens eines Sensorsystems 60 des Arbeitsgeräts 10. Nachfolgend erfolgt das Veranlassen 3 eines Bremsvorgangs unter Verwendung mindestens eines Antriebsmotors des Arbeitsgeräts 10, wenn eine kritische Betriebssituation erkannt wurde.

Anschließend erfolgt im Rahmen des Verarbeitens 4 das Messen 8 eines Zeitablaufs, um nach Ablauf einer vorbestimmten Zeit, hier 8 ms, mindestens einen Fahrparameter 5 zu erfassen. Bei dem Fahrparameter 5 handelt es sich um die aktuelle Geschwindigkeit des Arbeitsgeräts 10. Das Verarbeiten 4 umfasst das Abgleichen 4a des erfassten Fahrparameters 5 mit einem in einem Speicher bereitgehaltenen Fahrparameter-Sollwert 9, hier einem Geschwindigkeits-Sollwertes. Liegt der erfasste Fahrparameter 5 unterhalb des Fahrparameter-Sollwerts 9, erfolgt ein Auswählen 6 des Fortsetzens des Bremsvorgangs, liegt der erfasste Fahrparameter 5 oberhalb des Fahrparameter-Sollwerts 9, erfolgt eine Auswahl des Auslösens des Notbremsvorgangs und nachfolgend ein Betreiben 7 des Arbeitsgeräts 10 auf Basis der Auswahl.

### Bezugszeichenliste

- 10: Arbeitsgerät
- 20: Gehäuse
- 30: Antriebseinheit
- 40: Antriebsrad
- 50: Bearbeitungsumgebung
- 60: Sensorsystem

- 1: Verfahren
- 2: Erkennen
- 3: Veranlassen
- 4: Verarbeiten
- 4a: Abgleichen
- 5: Fahrparameter
- 6: Auswählen
- 7: Betreiben
- 8: Messen
- 9: Fahrparameter-Sollwert

## Patentansprüche

1. Verfahren (1) zum Betrieb eines Arbeitsgeräts (10), wobei das Arbeitsgerät (10) dazu ausgebildet ist, sich in einer Bearbeitungsumgebung (50) autonom fortzubewegen, zumindest aufweisend die folgenden Verfahrensschritte:
- Erkennen (2) einer sicherheitsrelevanten Betriebssituation unter Verwendung mindestens eines Sensorsystems (60) des Arbeitsgeräts (10),
- Veranlassen (3) eines Bremsvorgangs, wobei der Bremsvorgang die Verwendung zumindest eines Antriebsmotors des Arbeitsgeräts (10) zur Reduzierung der Geschwindigkeit beinhaltet, wenn eine kritische Betriebssituation erkannt wurde,
**dadurch gekennzeichnet, dass**
ferner folgende Verfahrensschritte umfasst sind:
- Verarbeiten (4) mindestens eines nach dem Veranlassen (3) des Bremsvorgangs ermittelten Fahrparameters (5), wobei das Verarbeiten (4) des mindestens einen Fahrparameters (5) das Abgleichen (4a) mit mindestens einem in einem Speicher abgelegten Fahrparameter-Sollwert (9) umfasst,
- Auswählen (6) zwischen einem Fortsetzen des Bremsvorgangs oder dem Auslösen eines Notbremsvorgangs in Abhängigkeit zumindest von dem verarbeiteten Fahrparameter.

2. Verfahren (1) nach Anspruch 1,
**dadurch gekennzeichnet, dass**
das Erkennen (2) unter Verwendung von Sensorinformationen mindestens eines Sensors oder einer Mehrzahl von Sensoren des Sensorsystems (60) erfolgt, insbesondere die Verwendung von Sensorinformationen mindestens eines Sturzsensors und/oder mindestens eines Kollisionssensors erfolgt.

3. Verfahren (1) nach Anspruch 1 oder 2,
**dadurch gekennzeichnet, dass**
als Fahrparameter (5) zumindest eine Geschwindigkeit und/oder eine Bewegungsrichtung und/oder ein Abstand zu einem Hindernis und/oder ein Abstand, insbesondere ein Abstand des Schwerpunkts des Arbeitsgeräts (10), zu einer Stufe verarbeitet (4) wird.

4. Verfahren (1) nach einem der Ansprüche 1 bis 3,
**dadurch gekennzeichnet, dass**
der Fahrparameter (5) nach Ablauf einer vorbestimmten Zeit nach dem Veranlassen (3) des Bremsvorgangs ermittelt wird, vorzugsweise dass die Zeit so gewählt ist, dass bei unverminderter Geschwindigkeit des Arbeitsgerätes (10) ein Schadensereignis nach Ablauf der Zeit noch nicht eingetreten ist, beispielsweise zwischen 3 ms und 15 ms, bevorzugt zwischen 5 ms und 10 ms.

5. Verfahren (1) nach einem der Ansprüche 1 bis 4,
**dadurch gekennzeichnet, dass**
als Fahrparameter (5) die aktuelle Geschwindigkeit ermittelt wird, und dass die aktuelle Geschwindigkeit unter Verwendung eines Wegmesssensors, insbesondere aufweisend mindestens einen Geber in mindestens einem Antriebsrad, und/oder einer Trägheitsmesseinheit und/oder eines Gyrosensors erfolgt.

6. Verfahren (1) nach einem der Ansprüche 1 bis 5,
**dadurch gekennzeichnet, dass**
das Verarbeiten (4) des mindestens einen Fahrparameters (5) das Abgleichen (4a) der aktuellen Geschwindigkeit mit mindestens einem in dem Speicher abgelegten Geschwindigkeits-Sollwert beinhaltet.

7. Verfahren (1) nach Anspruch 5 oder 6,
**dadurch gekennzeichnet, dass**
mindestens ein Fahrparameter-Sollwert (9) mindestens einen Geschwindigkeitswert repräsentiert, der unter Berücksichtigung einer Konfiguration des Arbeitsgeräts ermittelt worden ist und/oder dass mindestens ein in dem Speicher abgelegter Fahrparameter-Sollwert (9) zumindest eine prozentuale Reduzierung einer Ausgangsgeschwindigkeit um einen vorbestimmten Wert nach einer vorbestimmten Zeit repräsentiert.

8. Verfahren (1) nach einem der Ansprüche 5 bis 7,
**dadurch gekennzeichnet, dass**
unterschiedliche Fahrparameter-Sollwerte (9) für unterschiedliche Konfigurationen des Arbeitsgeräts (10) in dem Speicher bereitgehalten werden, und dass das Verarbeiten (4) des Fahrparameters (5) unter Berücksichtigung einer aktuellen Konfiguration des Arbeitsgerätes (10) erfolgt, insbesondere dass die unterschiedlichen Konfigurationen des Arbeitsgeräts (10) unterschiedliche Gehäusedimensionen und/oder die Lage des Schwerpunkts im Gehäuse (20) und/oder das Vorhandensein eines an dem Arbeitsgerät (10) montierten Zubehörbauteils und/oder den Füllstand eines Reinigungswasserbehälters und/oder den Füllstand eines Schmutzsammelbehälters berücksichtigen.

9. Verfahren (1) nach einem der Ansprüche 1 bis 8,
**dadurch gekennzeichnet, dass**
im Rahmen des Verarbeitens (4) ein Auswahlwert generiert wird, und dass der Auswahlwert eine Aussage darüber repräsentiert, ob das Eintreten eines aus der sicherheitsrelevanten Betriebssituation resultierenden Schadensereignisses durch den Bremsvorgang verhindert werden kann, insbesondere dass das Generieren des Auswahlwertes ein Abgleichen (4a) mit einem in einem Speicher bereitgehaltenen Fahrparameter-Sollwert (5) beinhaltet.

10. Verfahren (1) nach einem der Ansprüche 1 bis 9,
**dadurch gekennzeichnet, dass**
das Verarbeiten (4) die Bestimmung einer Wahrscheinlichkeit beinhaltet, insbesondere einer Wahrscheinlichkeit, die das Verhindern eines Schadensereignisses mit dem Bremsvorgang oder den Eintritt des Schadensereignisses bei Fortsetzen des Bremsvorgangs repräsentiert.

11. Verfahren (1) nach einem der Ansprüche 1 bis 10,
**dadurch gekennzeichnet, dass**
das Auswählen (6) des Auslösens des Notbremsvorgangs erfolgt, wenn in Abhängigkeit von der Verarbeitung (4) des Fahrparameters (5) der Eintritt eines Schadensereignisses mit dem Bremsvorgang nicht verhindert werden kann, insbesondere auf Basis einer im Rahmen des Verarbeitens (4) ermittelten Wahrscheinlichkeit.

12. Verfahren (1) nach einem der Ansprüche 1 bis 11,
**dadurch gekennzeichnet, dass**
das Auswählen (6) der Fortsetzung des Bremsvorgangs erfolgt, wenn in Abhängigkeit von der Verarbeitung (4) des Fahrparameters (5) der Eintritt eines Schadensereignisses mit dem Bremsvorgang verhindert werden kann, insbesondere dass nach einer Auswahl (6) des Fortsetzens des Bremsvorgangs der Bremsvorgang bis zu einem vollständigen Stillstand des Arbeitsgeräts (10) fortgeführt wird, und dass nach dem Stillstand des Arbeitsgeräts (10) ein Betrieb unter Vermeidung des Eintritts des Schadensereignisses fortgesetzt wird.

13. Verfahren (1) nach einem der Ansprüche 1 bis 12,
**dadurch gekennzeichnet, dass**
das Veranlassen (3) des Bremsvorgangs das Ansteuern mindestens eines Antriebsmotors, insbesondere aller Antriebsmotoren, mit einem Steuerbefehl umfasst, der den Antriebsmotor veranlasst oder die Antriebsmotoren veranlasst, eine Fahrbewegung auszuführen, die eine Reduzierung der Geschwindigkeit des Arbeitsgeräts (10) als Ziel hat, insbesondere eine Fahrbewegung entgegen der aktuellen Bewegungsrichtung auszuführen, oder dass das Veranlassen (3) des Bremsvorgangs ein Unterbrechen der Spannungsversorgung des Antriebsmotors oder der Antriebsmotoren beinhaltet.

14. Verfahren (1) nach einem der Ansprüche 1 bis 13,
**dadurch gekennzeichnet, dass**
das Auslösen der Notbremsfunktion das Auslösen eines separaten Notbremssystems beinhaltet, insbesondere dass das Notbremssystem nach einem Auslösen das mechanische Bewirken einer Bremskraft mit mindestens einem Bremselement auf mindestens ein sich zur Bewirkung einer Bewegung des Arbeitsgerätes (10) bewegendes Bauteil, beispielsweise einen Rotor eines Motors oder ein Bauteil eines Getriebes, bewirkt, bevorzugt, dass das Auslösen der Notbremsfunktion das Unterbrechen der Spannungsversorgung des Antriebsmotors oder der Antriebsmotoren beinhaltet.

15. Arbeitsgerät (10), mit mindestens einem Gehäuse (20), mindestens einer Antriebseinheit (30), mindestens einem Umgebungssensor (60) und mindestens einer Steuereinrichtung, wobei die Antriebseinheit (30) mindestens einen Antriebsmotor und mindestens ein Antriebsrad (40) aufweist, wobei das Arbeitsgerät (10) dazu ausgebildet und eingerichtet ist, sich in einer Bearbeitungsumgebung (50) autonom fortzubewegen,
**dadurch gekennzeichnet, dass**
das Arbeitsgerät (10) zur Durchführung eines Verfahrens (1) nach einem der Ansprüche 1 bis 14 ausgebildet und eingerichtet ist.

## Claims

1. Method (1) for operating a working device (10), wherein the working device (10) is arranged to move autonomously in a processing environment (50), at least comprising the following method steps:
- Detection (2) of a safety-relevant operating situation using at least one sensor system (60) of the working device (10),
- Initiating (3) a braking process, the braking process including using at least one drive motor of the working device (10) to reduce speed when a critical operating situation has been detected,
**characterized in that**
further the following method steps are comprised:
- Processing (4) at least one driving parameter (5) determined after initiating (3) the braking process, wherein the processing (4) of the at least one driving parameter (5) comprises the comparison (4a) with at least one driving parameter setpoint (9) stored in a memory,
- Selecting (6) between a continuation of the braking process or the initiation of an emergency braking process depending at least on the processed driving parameter.

2. Method (1) according to claim 1,
**characterized in that**
the detection (2) is carried out using sensor information of at least one sensor or a plurality of sensors of the sensor system (60), in particular the use of sensor information of at least one fall sensor and/or at least one collision sensor is carried out.

3. Method (1) according to claim 1 or 2,
**characterized in that**
at least a speed and/or a direction of movement and/or a distance to an obstacle and/or a distance, in particular a distance of the center of gravity of the working device (10) to a step is processed (4) as a driving parameter (5).

4. Method (1) according to any one of claims 1 to 3,
**characterized in that**
the driving parameter (5) is determined after a predetermined time has elapsed after the initiation (3) of the braking process, preferably **in that** the time is selected such that, at undiminished speed of the working device (10), a damage event has not yet occurred after the time has elapsed, for example between 3 ms and 15 ms, preferably between 5 ms and 10 ms.

5. Method (1) according to any one of claims 1 to 4,
**characterized in that**
the current speed is determined as a driving parameter (5), and **in that** the current speed is determined using a displacement sensor, in particular having at least one encoder in at least one drive wheel, and/or an inertial measurement unit and/or a gyro sensor.

6. Method (1) according to any one of claims 1 to 5,
**characterized in that**
the processing (4) of the at least one driving parameter (5) comprises the comparison (4a) of the current speed with at least one speed setpoint stored in the memory.

7. Method (1) according to claim 5 or 6,
**characterized in that**
at least one driving parameter setpoint (9) represents at least one speed value which has been determined taking into account a configuration of the working device (10) and/or **in that** at least one driving parameter setpoint (9) stored in the memory represents at least a percentage reduction of an output speed by a predetermined value after a predetermined time.

8. Method (1) according to any one of claims 5 to 7,
**characterized in that**
different driving parameter setpoints (9) for different configurations of the working device (10) are kept ready in the memory, and **in that** the processing (4) of the driving parameter (5) takes place taking into account a current configuration of the working device (10), in particular **in that** the different configurations of the working device (10) take into account different housing dimensions and/or the position of the center of gravity in the housing (20) and/or the presence of an accessory component mounted on the working device (10) and/or the filling level of a cleaning water tank and/or the filling level of a dirt collection tank.

9. Method (1) according to any one of claims 1 to 8,
**characterized in that**
a selection value is generated in the course of the processing (4), and **in that** the selection value represents a statement as to whether the occurrence of a damaging event resulting from the safety-relevant operating situation can be prevented by the braking process, in particular **in that** the generation of the selection value includes a comparison (4a) with a driving parameter setpoint (5) held in a memory.

10. Method (1) according to any one of claims 1 to 9,
**characterized in that**
the processing (4) includes determining a probability, in particular a probability representing the prevention of a damaging event with the braking process or the occurrence of the damaging event if the braking process continues.

11. Method (1) according to any one of claims 1 to 10,
**characterized in that**
the selection (6) of the triggering of the emergency braking process takes place if, depending on the processing (4) of the driving parameter (5), the occurrence of a damaging event cannot be prevented with the braking process, in particular on the basis of a probability determined in the course of the processing (4).

12. Method (1) according to any one of claims 1 to 11,
**characterized in that**
the selection (6) of the continuation of the braking process takes place if, depending on the processing (4) of the driving parameter (5), the occurrence of a damaging event can be prevented with the braking process, in particular that after a selection (6) of the continuation of the braking process, the braking process is continued until a complete standstill of the working device (10), and that after the standstill of the working device (10), an operation is continued while avoiding the occurrence of the damaging event.

13. Method (1) according to any one of claims 1 to 12,
**characterized in that**
the initiation (3) of the braking process comprises the control of at least one drive motor, in particular of all drive motors, with a control command which causes the drive motor or the drive motors to execute a driving movement which has as its objective a reduction in the speed of the working device (10), in particular to execute a driving movement counter to the current direction of movement, or **in that** the initiation (3) of the braking process includes an interruption of the voltage supply to the drive motor or the drive motors.

14. Method (1) according to any one of claims 1 to 13,
**characterized in that**
the triggering of the emergency brake function includes the triggering of a separate emergency brake system, in particular that the emergency brake system after a triggering causes the mechanical application of a braking force with at least one brake element to at least one component moving to cause a movement of the working device (10), for example a rotor of a motor or a component of a gearbox, preferably that the triggering of the emergency brake function includes the interruption of the voltage supply of the drive motor or the drive motors.

15. Working device (10), having at least one housing (20), at least one drive unit (30), at least one environment sensor (60) and at least one control device, the drive unit (30) having at least one drive motor and at least one drive wheel (40), the working device (10) being designed and set up to move autonomously in a processing environment (50),
**characterized in that**
the working device (10) is constructed and arranged for carrying out a method (1) according to any one of claims 1 to 14.

## Revendications

1. Procédé (1) pour faire fonctionner un appareil de travail (10), le appareil de travail (10) étant conçu pour se déplacer de manière autonome dans un environnement de traitement (50), comprenant au moins les étapes de procédé suivantes :
- détection (2) d'une situation de fonctionnement important pour la sécurité en utilisant au moins un système de capteurs (60) du appareil de travail (10),
- déclencer (3) une opération de freinage, l'opération de freinage comprenant l'utilisation d'au moins un moteur d'entraînement du appareil de travail (10) pour réduire la vitesse lorsqu'une situation critique de fonctionnement a été détectée
**caractérisé en**
les étapes de procédé suivantes sont en outre comprises :
- traitement (4) d'au moins un paramètre de conduite (5) déterminé après le déclenchement (3) de l'opération de freinage, le traitement (4) d'au moins un paramètre de conduite (5) comprenant la comparaison (4a) avec au moins une valeur de consigne de paramètre de conduite (9) stockée dans une mémoire,
- sélectionnement (6) entre une poursuite du processus de freinage ou le déclenchement d'un processus de freinage d'urgence en fonction au moins du paramètre de conduite traité.

2. Procédé (1) selon la revendication 1,
**caractérisé en ce que**
la détection (2) s'effectue en utilisant des informations de capteur d'au moins un capteur ou d'une pluralité de capteurs du système de capteurs (60), en particulier l'utilisation des informations de capteur d'au moins un capteur de chute et/ou d'au moins un capteur de collision.

3. Procédé (1) selon la revendication 1 ou 2,
**caractérisé en ce que**
on traite (4) comme paramètre de déplacement (5) au moins une vitesse et/ou une direction de déplacement et/ou une distance par rapport à un obstacle et/ou une distance, en particulier une distance du centre de gravité du appareil de travail (10), par rapport à une marche.

4. Procédé (1) selon l'une quelconque des revendications 1 à 3,
**caractérisé en ce que**
le paramètre de conduite (5) est déterminé après l'écoulement d'un temps prédéterminé après le déclenchement (3) du processus de freinage, de préférence **en ce que** le temps est choisi de telle sorte qu'à une vitesse non réduite du appareil de travail (10), un événement de dommage ne se soit pas encore produit après l'écoulement du temps, par exemple entre 3 ms et 15 ms, de préférence entre 5 ms et 10 ms.

5. Procédé (1) selon l'une quelconque des revendications 1 à 4,
**caractérisé en ce que**
la vitesse actuelle est déterminée comme paramètre de conduite (5), et **en ce que** la vitesse actuelle s'effectue en utilisant un capteur de mesure de déplacement, présentant en particulier au moins un capteur dans au moins une roue motrice, et/ou une unité de mesure inertielle et/ou un capteur gyroscopique.

6. Procédé (1) selon l'une quelconque des revendications 1 à 5,
**caractérisé en ce que**
le traitement (4) de l'au moins un paramètre de conduite (5) comprend la comparaison (4a) de la vitesse actuelle avec au moins une valeur de consigne de vitesse stockée dans la mémoire.

7. Procédé (1) selon la revendication 5 ou 6,
**caractérisé en ce que**
au moins une valeur de consigne de paramètre de conduite (9) représente au moins une valeur de vitesse qui a été déterminée en tenant compte d'une configuration de l'outil de travail et/ou **en ce qu'**au moins une valeur de consigne de paramètre de conduite (9) stockée dans la mémoire représente au moins une réduction en pourcentage d'une vitesse de sortie d'une valeur prédéterminée après un temps prédéterminé.

8. Procédé (1) selon l'une quelconque des revendications 5 à 7,
**caractérisé en ce que**
différentes valeurs de consigne de paramètre de conduite (9) sont tenues à disposition dans la mémoire pour différentes configurations du appareil de travail (10), et **en ce que** le traitement (4) du paramètre de conduite (5) s'effectue en tenant compte d'une configuration actuelle du appareil de travail (10), en particulier **en ce que** les différentes configurations du appareil de travail (10) tiennent compte de différentes dimensions de boîtier et/ou de la position du centre de gravité dans le boîtier (20) et/ou de la présence d'un composant accessoire monté sur le appareil de travail (10) et/ou du niveau de remplissage d'un réservoir d'eau de nettoyage et/ou du niveau de remplissage d'un réservoir de collecte de saletés.

9. Procédé (1) selon l'une quelconque des revendications 1 à 8,
**caractérisé en ce que**
une valeur de sélection est générée dans le cadre du traitement (4), et **en ce que** la valeur de sélection représente une information sur le fait de savoir si la survenance d'un événement dommageable résultant de la situation de fonctionnement relevant de la sécurité peut être empêchée par le processus de freinage, en particulier **en ce que** la génération de la valeur de sélection comprend une comparaison (4a) avec une valeur de consigne de paramètre de conduite (5) tenue à disposition dans une mémoire.

10. Procédé (1) selon l'une quelconque des revendications 1 à 9,
**caractérisé en ce que**
le traitement (4) comprend la détermination d'une probabilité, en particulier une probabilité représentant l'empêchement d'un événement dommageable avec l'opération de freinage ou la survenue de l'événement dommageable si l'opération de freinage se poursuit.

11. Procédé (1) selon l'une quelconque des revendications 1 à 10,
**caractérisé en ce que**
la sélection (6) du déclenchement du processus de freinage d'urgence a lieu lorsque, en fonction du traitement (4) du paramètre de conduite (5), la survenue d'un événement dommageable ne peut pas être évitée avec le processus de freinage, en particulier sur la base d'une probabilité déterminée dans le cadre du traitement (4).

12. Procédé (1) selon l'une quelconque des revendications 1 à 11,
**caractérisé en ce que**
la sélection (6) de la poursuite du processus de freinage a lieu lorsque, en fonction du traitement (4) du paramètre de conduite (5), l'apparition d'un événement dommageable peut être évitée avec le processus de freinage, en particulier qu'après une sélection (6) de la poursuite du processus de freinage, le processus de freinage est poursuivi jusqu'à un arrêt complet du appareil de travail (10), et qu'après l'arrêt du appareil de travail (10), un fonctionnement est poursuivi en évitant l'apparition de l'événement dommageable.

13. Procédé (1) selon l'une quelconque des revendications 1 à 12,
**caractérisé en ce que**
le déclenchement (3) du processus de freinage comprend la commande d'au moins un moteur d'entraînement, en particulier de tous les moteurs d'entraînement, avec un ordre de commande qui amène le moteur d'entraînement ou les moteurs d'entraînement à exécuter un mouvement de déplacement qui a pour but une réduction de la vitesse du appareil de travail (10), en particulier à exécuter un mouvement de déplacement dans le sens contraire au sens de déplacement actuel, ou **en ce que** le déclenchement (3) du processus de freinage comprend une interruption de l'alimentation en tension du moteur d'entraînement ou des moteurs d'entraînement.

14. Procédé (1) selon l'une quelconque des revendications 1 à 13,
**caractérisé en ce que**
le déclenchement de la fonction de freinage d'urgence comprend le déclenchement d'un système de freinage d'urgence séparé, en particulier **en ce que** le système de freinage d'urgence provoque, après un déclenchement, l'application mécanique d'une force de freinage avec au moins un élément de freinage sur au moins un composant se déplaçant pour provoquer un mouvement du appareil de travail (10), par exemple un rotor d'un moteur ou un composant d'une transmission, de préférence **en ce que** le déclenchement de la fonction de freinage d'urgence comprend la coupure de l'alimentation en tension du moteur d'entraînement ou des moteurs d'entraînement.

15. Appareil de travail (10), avec au moins un boîtier (20), au moins une unité d'entraînement (30), au moins un capteur d'environnement (60) et au moins un dispositif de commande, l'unité d'entraînement (30) présentant au moins un moteur d'entraînement et au moins une roue d'entraînement (40), le appareil de travail (10) étant conçu et configuré pour se déplacer de manière autonome dans un environnement de traitement (50),
**caractérisé en ce que**
l'appareil de travail (10) est conçu et configuré pour la mise en oeuvre d'un procédé (1) selon l'une des revendications 1 à 14.
